# EUROPEAN PATENT APPLICATION

(11) **EP 2 065 666 A1**
(43) Date of publication of application: **03.06.2009**
(21) Application number: 07425759.3
(22) Date of filing: 29.11.2007
(51) Int. Cl.: F28D 20/00, F28D 7/04, F24H 1/20

(54) **Boiler particularly for solar panels systems**

(71) Applicant: Marani G. S.R.L., 37060 Buttapietra (VR) (IT)
(72) Inventor: Marani, Diego, 37057 San Giovanni Lupatoto (VR) (IT)
(74) Representative: Alagem Modiano, Lara S.

(57) **Abstract**

A boiler (1) particularly for solar panels systems, having a first chamber (2), which is designed to contain hot water, a second chamber (3), which is designed to contain water at a lower temperature than the water contained in the first chamber (2), and a heat exchange region (4), which can be connected to the first chamber (2) and to the second chamber (3) and is provided with water heating means (5) which are connected to a heat energy source. The first chamber (2) is arranged at a higher level than the heat exchange region (4) in order to allow water circulation, by natural convection, between the first chamber (2) and the heat exchange region (4). Means (6) are also provided for the forced circulation of the water between the second chamber (3) and the heat exchange region (4).

## Description

The present invention relates to a boiler particularly but not exclusively adapted to be used in systems for generating heat energy by means of solar panels.

As is known, boilers used in solar panels heating systems are constituted substantially by a cylindrical tank which has a vertical axis and in which the water to be fed to the heat users and to the hydraulic and sanitary systems is accumulated and heated by means of heat exchangers which have different shapes, depending on the type of boiler, and receive heat energy from a heat transfer fluid, which in turn is heated by the solar panels.

The drawbacks that can be observed typically in this type of boilers are constituted both by difficulty in having an adequate stratification of the temperatures of the water contained in the tank and by the impossibility to heat rapidly a given part of the boiler, more specifically the part designed to supply sanitary water, since the heat energy supplied by means of the heat exchanger by the solar panels system to the water contained in the tank is not constant but varies with the intensity of the sunlight and therefore high temperatures can be reached in the boiler only at certain times during the day.

For example, a type of boiler is known commercially in which the heat exchanger is constituted by a tube for circulating the heat transfer fluid which is arranged on the bottom of the tank and is surmounted by a frustum-shaped partition which tapers upwardly and blends with a distribution duct which extends coaxially with respect to the tank and has a plurality of passage ports, which are spaced one another along its extension, and an outlet which leads into the top of the tank.

In the described solution, within the tank water circulation is produced by natural convection so that the water, heated by the heat exchanger, tends to rise from the bottom of the tank and to be conveyed into the distribution duct, from which it exits through the passage ports and through the outlet, distributing itself at different heights within the tank as a function of its temperature, while colder water instead tends to descend along the walls of the tank until it reaches the bottom, passing through appropriately provided openings formed in the partition, so that it can be heated by the heat exchanger.

Although boilers thus structured are valid in principle, it is observed however that natural circulation of water inside them occurs with the intensity required to ensure satisfactory stratification of temperatures only during the transients for heating the water in the boiler when cold and in the conditions of highest intensity of sunlight during the day, i.e., when the heat energy supplied to the water by the heat exchanger is high.

The aim of the present invention is to provide a valid solution to the problem noted above of the background art by providing a boiler which is capable of ensuring optimum temperature stratification and of performing a rapid heating of the water meant for hydraulic and sanitary systems in any condition of supply of heat energy to the water to be heated.

Within this aim, an object of the invention is to provide a boiler which thanks to its particular constructive characteristics is capable of giving the greatest assurances of reliability and safety during its operation.

Another object of the present invention is to provide a boiler which can be obtained by means of commonly commercially available elements and materials so as to be competitive also from a merely economical standpoint.

This aim and these and other objects, which will become better apparent hereinafter, are achieved by a boiler particularly for solar panels systems according to the invention, as defined in claim 1.

Further characteristics and advantages of the invention will become better apparent from the description of some preferred but not exclusive embodiments of the boiler according to the invention, illustrated by way of non-limiting example in the accompanying drawings, wherein:

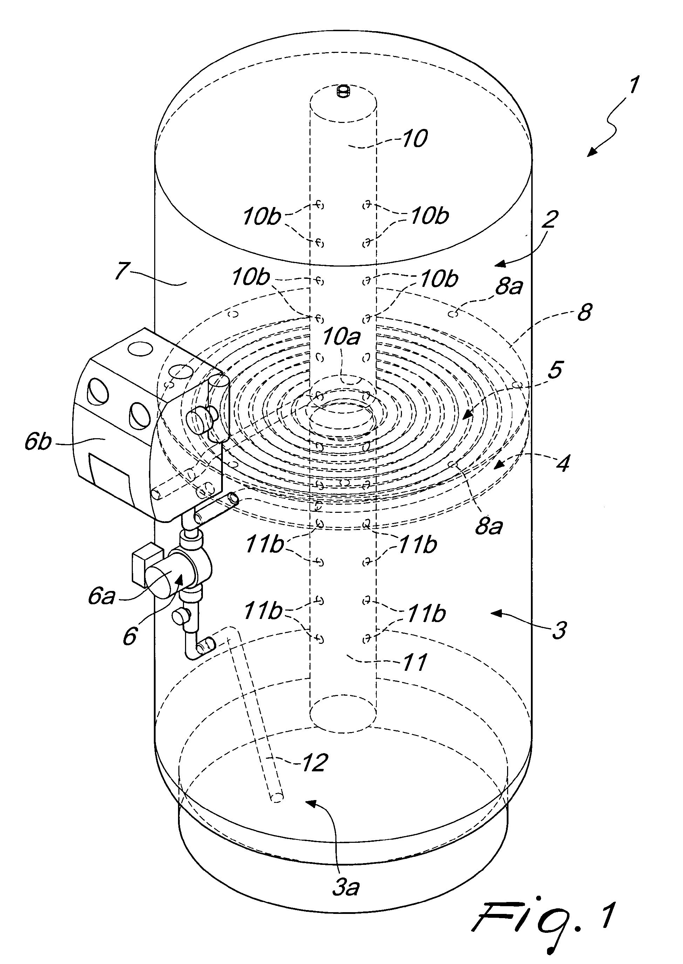

Figure 1 is a top perspective view, shown partially in phantom lines, of the boiler according to the invention;

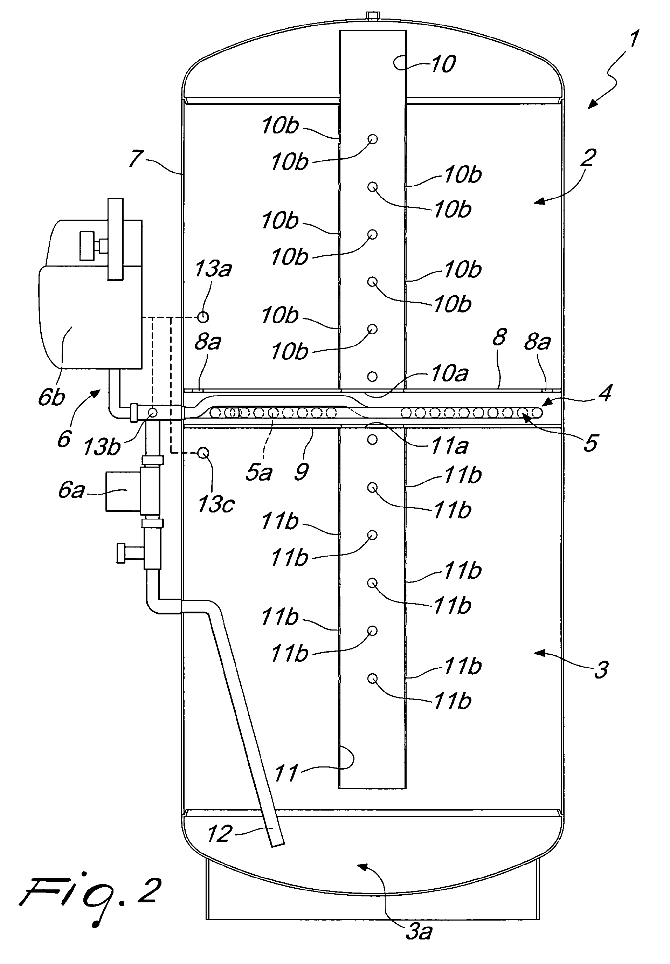

Figure 2 is a cutout view of the boiler according to the invention, taken along a vertical plane;

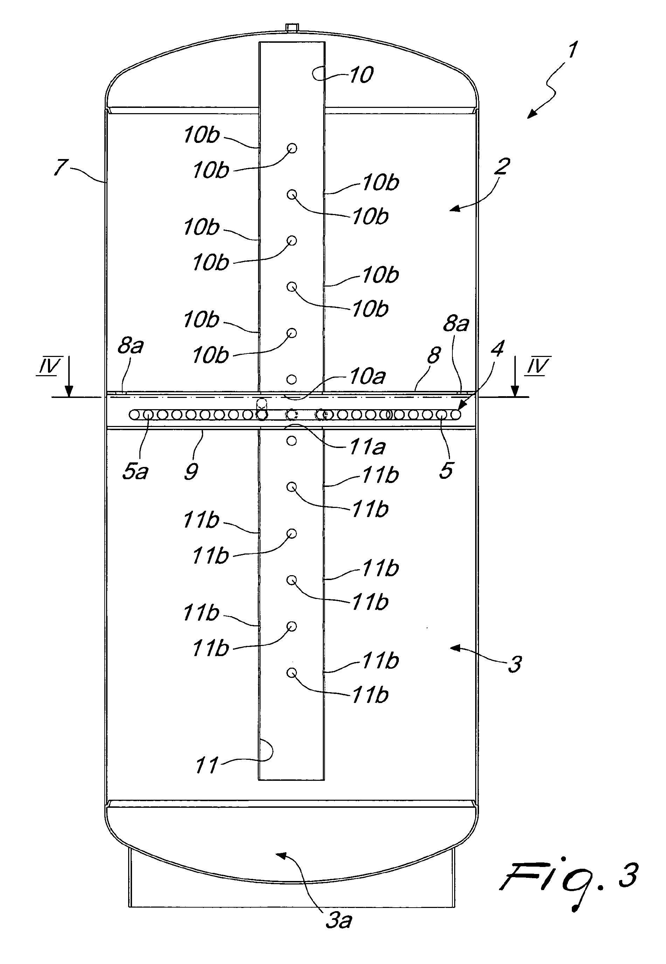

Figure 3 is a sectional view of the boiler according to the invention, taken along another vertical plane with respect to the plane of Figure 2;

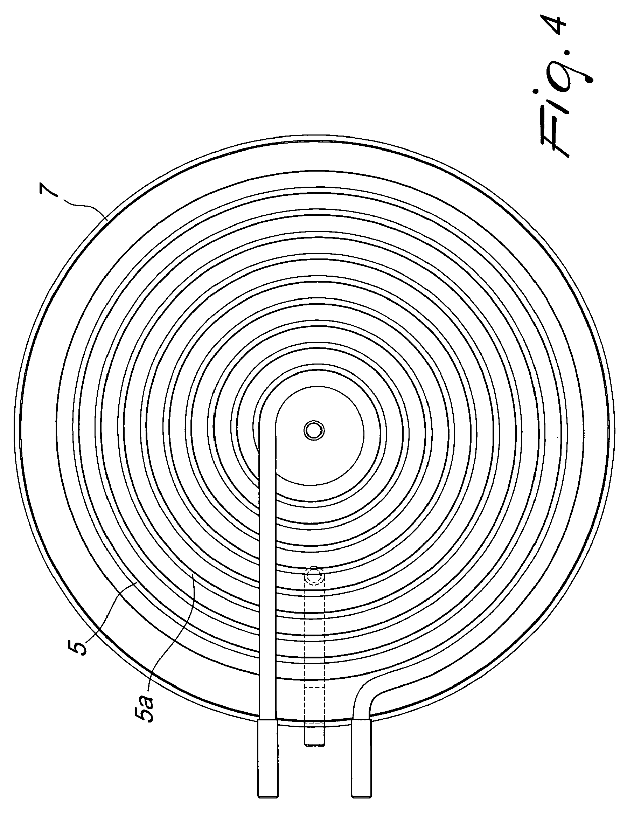

Figure 4 is a sectional view, taken along the line IV-IV of Figure 3.

With reference to the figures, the boiler particularly for solar panels systems, according to the invention, generally designated by the reference numeral 1, comprises a first chamber 2, which is designed to contain hot water, for example at a temperature ranging from 50 to 60°C, and a second chamber 3, which is instead designed to contain water at a lower temperature than the water contained in the first chamber 2, such as for example a temperature ranging from 35 to 45°C.

The boiler according to the invention further has a heat exchange region 4, which can be connected to the first chamber 2 and to the second chamber 3 and is provided with water heating means 5 associated with a heat energy source, which can be provided for example by a solar panels heating assembly or by a burner or by any other device capable of providing heat energy to the water to be heated in the boiler.

In particular, the first chamber 2 is arranged at a higher level than the heat exchange region 4, so that it possible to establish, between the first chamber 2 and the heat exchange region 4, a water circulation by natural convection which is capable of allowing the heating of the water contained in the first chamber 2 by way of the heating means 5.

Also according to the invention, there are forced circulation means 6 which are designed to circulate the water between the second chamber 3 and the heat exchange region 4 and are designed to act in order to heat the water contained in the second chamber 3.

Conveniently, in the embodiment shown in the figures, the first chamber 2, the second chamber 3 and the heat exchange region 4 are defined axially within a single tank 7, which has a cylindrical shape with a substantially vertical axis.

More particularly, inside the tank 7 the first chamber 2 is advantageously arranged above the second chamber 3, while the heat exchange region 4 is interposed between the first chamber 2 and the second chamber 3.

As shown, the heat exchange region 4 in practice is constituted by an interspace and is conveniently delimited by an upper partition 8, which separates the heat exchange region 4 from the first chamber 2, and by a lower partition 9 which instead separates the heat exchange region 4 from the second chamber 3.

Advantageously, inside the first chamber 2 first water distribution means are provided, which are connected to the heat exchange region 4 and allow to convey the rising current of the water that arrives from the heat exchange region 4 to different heights inside the first chamber 2 depending on its temperature, so as to achieve an adequate stratification of the temperatures in the first chamber 2.

Conveniently, such first water distribution means are provided by at least one first distribution pipe 10, which extends substantially vertically inside the first chamber 2 and has an inlet 10a, connected to the heat exchange region 4, and a plurality of output ports 10b, which are spaced one another at different heights along the extension of the first distribution pipe 10.

In this manner, the water that arrives from the heat exchange region 4 and is conveyed by natural convection into the first distribution pipe 10 through its inlet 10a is able to exit from the first distribution pipe 10 through the output ports 10b substantially at the height at which the water at its same temperature is present inside the first chamber 2.

Likewise, conveniently, second water distribution means are also provided within the second chamber 3, are connected to the heat exchange region 4 and are designed to convey the water heated in the heat exchange region 4 to different heights, inside the second chamber 3, as a function of its temperature.

In particular, the second distribution means comprise at least one second distribution pipe 11, which extends substantially vertically inside the second chamber 3 and has an inlet 11 a, which is connected to the heat exchange region 4, and a plurality of output ports 11b, which are spaced one another at different heights along the extension of the second distribution pipe 11.

With this arrangement, in practice, during the activation of the forced circulation means 6 the water is conveyed from the heat exchange region 4 into the second distribution pipe 11 and distributed inside the second chamber 3, so as to bring it to the same height at which the water at its same temperature is present in the second chamber 3.

As can be seen from the figures, the first distribution pipe 10 and the second distribution pipe 11 are conveniently arranged substantially coaxially to the axis of the tank 7, so as to achieve, through them, a symmetrical distribution of the water inside the first chamber 2 and the second chamber 3 in order to ensure higher uniformity in the water heating step.

In this regard, it should be noted that at the peripheral region of the upper partition 8 there is advantageously a plurality of passage ports 8a, which are distributed around the axis of the tank 7 and are designed to connect the first chamber 2 to the heat exchange region 4 in order to allow the colder water contained in the first chamber 2 to descend along the side walls of the first chamber 2 and enter the heat exchange region 4 through the passage ports 8a.

With reference to the exemplary embodiment shown in the figures, the heating means 5 are constituted by at least one exchange duct 5a, inside which a heating fluid flows.

In particular, the exchange duct 5a can be connected for example to a solar panel heating assembly, and in this case the heating fluid can be constituted by water, glycol or other suitable heat transfer fluid of a known type, which is made to flow inside the exchange duct 5a by means of an appropriately provided circulation unit, not shown, which is usually provided in the solar panels heating assembly and can be activated or deactivated on command, according to the requirements, as will become better apparent hereinafter.

If instead the exchange duct 5a is connected to a burner assembly, the hot fluid generated by such burner flows inside it.

Advantageously, the exchange duct 5a is arranged along a circular spiral shape substantially concentrically with respect to the axis of the tank 7, so that it can be struck uniformly by the water to be heated which passes in the heat exchange region and consequently achieve effective heat transmission.

As shown, the forced circulation means 6 cited above advantageously comprise a circulation pump 6a, which by means of an extraction pipe 12 draws, with its intake, from the lower part 3 a of the second chamber 3 and is connected, with its delivery, to the heat exchange region 4, so as to generate a stream of water which affects the entire volume of the second chamber 3.

In practice, as a consequence of the activation of the circulation pump 6a, water is drawn from the lower part 3a of the second chamber 3 and is fed to the heat exchange region 4, in which it is heated by the heating means 5 and is then drawn back into the second chamber 3 due to the difference in pressure determined by the circulation pump 6a between the heat exchange region 4 and the second chamber 3, entering the second distribution pipe 11, from which it exits, through its output ports 11b, at the region where water at its same temperature is located in the second chamber 3.

Conveniently, the circulation pump 6a is controlled by control and actuation means 6b, constituted for example by a programmable electronic controller, which control the activation or deactivation of the circulation pump 6a depending on the temperature levels reached within the boiler.

More particularly, the control and actuation means 6b are functionally connected to means for detecting the difference in temperature between the heating means 5 and the water contained in the first chamber 2 and are designed to activate the circulation pump 6a when said difference in temperature is below a preset limit value, so that the heat supplied by the heating means 5 to the water that is present in the heat exchange region 4 is not sufficient to provide a natural circulation of the water inside the first chamber 2.

More preferably, such detection means comprise a first temperature sensor 13a, which is arranged within the first chamber 2, and a second temperature sensor 13b, which is designed to detect the temperature of the heating fluid that circulates inside the exchange duct 5a.

Advantageously, the detection means can further activate, by means of the control and actuation means 6b, also the circulation unit of the solar panels heating assembly when the difference in temperature between the heating means 5 and the water in the first chamber 2 exceeds a preset threshold value, which can be equal for example to such limit value.

For the sake of completeness, it should be added that advantageously there is also a third temperature sensor 13c, which is again connected to the control and actuation means 6b and is arranged in the second chamber 3 in order to monitor the temperature reached inside the second chamber 3.

Operation of the boiler according to the invention is as follows.

With specific reference to the case in which the boiler according to the invention is associated with a solar panels heating assembly, exposure of the solar panels to solar radiation produces a progressive increase in the temperature of the heating fluid contained inside such solar panels.

When the temperature of the heating fluid detected by the second sensor 13b exceeds by a preset threshold value, for example 8°C, the temperature of the water in the first chamber 2 which is measured by the first sensor 13a, the control and actuation means 6b activate the circulation unit of the solar panels heating assembly, thus starting a transfer of heat from the heating means 5 to the water of the first chamber 2 by natural convection.

As a consequence of this, the temperature of the first chamber 2 of the boiler begins to increase, while the water in the second chamber 3 remains practically at an unchanged temperature.

It should be noted that the temperature of the heating fluid that circulates in the solar panels usually continues to vary as a function of the variation of solar radiation, so that in good weather conditions it increases gradually through the day, begins to decrease as sunset approaches and then stabilizes at ambient temperature, i.e., approximately 18-20°C, in the absence of radiation, such as at night.

Merely by way of example, starting from a condition in which the water in the boiler is at an ambient temperature of approximately 18-20°C, during a sunny day the water in the first chamber 2 can reach a high temperature, for example approximately 55°C, while the water in the second chamber 3 remains at the temperature of 18-20°C.

As solar radiation decreases as sunset approaches, the temperature of the heating fluid that flows through the exchange duct 5a instead decreases gradually, as mentioned, until a condition is reached, for example, in which the difference between the temperature of the heating fluid, measured by the second sensor 13b, and the temperature of the water in the first chamber 2, detected by the first sensor 13a, is lower than a preset limit value, which corresponds for example to the threshold value of approximately 8°C, although the temperature of the heating fluid remains higher than the temperature of the water in the second chamber 3.

When this condition is reached, the control and actuation means 6b activate the circulation pump 6a automatically, so as to generate, between the second chamber 3 and the heat exchange region 4, a forced circulation of the water which allows to provide gradual heating of the water in the second chamber 3.

When the difference between the temperature of the heating fluid contained in the exchange duct 5a and the temperature of the water in the second chamber 3 becomes lower than a preset minimum value, which can be for example 8°C, the control and actuation means 6b deactivate both the circulation unit of the solar panel assembly and the circulation pump 6a, so as to interrupt the forced flow of water between the second chamber 3 and the heat exchange region 4.

At the end of the day, therefore, the water in the boiler is perfectly stratified, with for example a water temperature in the first chamber 2 of approximately 55-60°C, therefore suitable for generating sanitary water, and with the water in the second chamber 3 at a temperature of for example approximately 35-40°C, ideal for distribution to the heating system.

In practice it has been found that the invention achieves, in all of its embodiments, the intended aim and objects, and in particular the fact is stressed that the boiler according to invention allows to achieve optimum stratification of the temperatures inside it, differently from traditional boilers, with which, for an equal heat energy transferred to the water in the boiler, it is possible to achieve at best a uniform temperature of the water in all the boiler of approximately 46°C, which is insufficient for generating sanitary water, i.e., water for user devices such as a shower.

Another advantage of the boiler according to the invention consists in that it allows to heat the water by means of a natural circulation in a smaller volume of water than boilers of the background art with a tank of equal capacity. All the characteristics of the invention indicated above as advantageous, convenient or the like may also be omitted or be replaced with equivalents.

The individual characteristics presented with reference to general teachings or to particular embodiments may all be present in other embodiments or may replace characteristics in these embodiments.

The invention thus conceived is susceptible of numerous modifications and variations, all of which are within the scope of the appended claims.

In practice, the materials used, so long as they are compatible with the specific use, as well as the shapes and dimensions, may be any according to requirements.

All the details may further be replaced with other technically equivalent elements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A boiler (1) particularly for solar panels systems, **characterized in that** it comprises a first chamber (2), which is designed to contain hot water, a second chamber (3), which is designed to contain water at a lower temperature than the water contained in said first chamber (2), and a heat exchange region (4), which can be connected to said first chamber (2) and to said second chamber (3) and is provided with water heating means (5) which are connected to a heat energy source, said first chamber (2) being arranged at a higher level than said heat exchange region (4) in order to allow water circulation, by natural convection, between said first chamber (2) and said heat exchange region (4), means (6) being further provided for the forced circulation of the water between said second chamber (3) and said heat exchange region (4).

2. The boiler according to claim 1, **characterized in that** said first chamber (2), said second chamber (3) and said heat exchange region (4) are defined axially within a single tank (7) which has a cylindrical shape with a substantially vertical axis.

3. The boiler according to one or more of the preceding claims, **characterized in that** said first chamber (2) is arranged, inside said tank (7), above said second chamber (3), said heat exchange region (4) being interposed between said first chamber (2) and said second chamber (3).

4. The boiler according to one or more of the preceding claims, **characterized in that** said heat exchange region (4) is delimited between an upper partition (8) for separation from said first chamber (2) and a lower partition (9) for separation from said second chamber (3).

5. The boiler according to one or more of the preceding claims, **characterized in that** it comprises, inside said first chamber (2), first water distribution means which are connected to said heat exchange region (4) in order to convey the water that arrives from said heat exchange region (4) to different heights inside said first chamber (2) as a function of its temperature.

6. The boiler according to one or more of the preceding claims, **characterized in that** it comprises second water distribution means which are connected to said heat exchange region (4) and lie within said second chamber (3) in order to convey the water heated in said heat exchange region (4) to different heights within said second chamber (3) as a function of its temperature.

7. The boiler according to one or more of the preceding claims, **characterized in that** said first distribution means comprise at least one first distribution pipe (10), which extends substantially vertically within said first chamber (2) and has an inlet which is connected to said heat exchange region (4) and a plurality of output ports which are spaced one another at different heights along the extension of said first distribution pipe (10).

8. The boiler according to one or more of the preceding claims, **characterized in that** said second distribution means comprise at least one second distribution pipe (11) which extends substantially vertically within said second chamber (3) and has an inlet connected to said heat exchange region (4) and a plurality of output ports which are spaced one another at different heights along the extension of said second distribution pipe (11).

9. The boiler according to one or more of the preceding claims, **characterized in that** said first distribution pipe (10) and said second distribution pipe (11) are arranged substantially coaxially to the axis of said tank (7).

10. The boiler according to one or more of the preceding claims, **characterized in that** a plurality of passage ports (8a) are defined peripherally in said upper separation partition (8), are distributed around the axis of said tank (7) and are adapted to connect said first chamber (2) to said heat exchange region (4).

11. The boiler according to one or more of the preceding claims, **characterized in that** said heating means (5) comprise at least one exchange duct (5a) inside which a heating fluid flows.

12. The boiler according to one or more of the preceding claims, **characterized in that** said at least one exchange duct (5a) extends in a circular spiral substantially concentrically to the axis of said tank (7).

13. The boiler according to one or more of the preceding claims, **characterized in that** said at least one exchange duct (5a) is connected to a solar panels heating assembly.

14. The boiler according to one or more of the preceding claims, **characterized in that** said forced circulation means (6) comprise a circulation pump (6a) which draws, with its intake, from the lower part (3a) of said second chamber (3) and is connected, by means of its delivery, to said heat exchange region (4).

15. The boiler according to one or more of the preceding claims, **characterized in that** said circulation pump (6a) is controlled by control and actuation means (6b), which are functionally connected to means for detecting the difference in temperature between said heating means and the water in said first chamber (2), said control and actuation means (6b) being designed to activate said circulation pump (6a) when the difference in temperature between the water in said first chamber (2) and said heating means (5) is below a preset limit value.
